# EUROPÄISCHE PATENTSCHRIFT

(11) **EP 0 809 667 B1**
(45) Veröffentlichungstag und Bekanntmachung des Hinweises auf die Patenterteilung: **04.08.1999**
(21) Anmeldenummer: 96904762.0
(22) Anmeldetag: 13.02.1996
(51) Int. Cl.: C08G 63/672, C08G 63/193, C08G 63/197

(54) **CHIRAL NEMATISCHE POLYESTER**
CHIRALLY NEMATIC POLYESTERS
POLYESTERS NEMATIQUES CHIRALEMENT

(30) Priorität: 15.02.1995 DE 19504913
(43) Veröffentlichungstag der Anmeldung: 03.12.1997
(73) Patentinhaber: BASF AKTIENGESELLSCHAFT, 67056 Ludwigshafen (DE)
(72) Erfinder: SIEMENSMEYER, Karl, D-67227 Frankenthal (DE); MEYER, Frank, D-67063 Ludwigshafen (DE); ETZBACH, Karl-Heinz, D-67227 Frankenthal (DE); KRICHELDORF, Hans, R., D-22607 Hamburg (DE); PROBST, Nicolas, D-22307 Hamburg (DE)
(86) Internationale Anmeldenummer: EP9600602
(87) Internationale Veröffentlichungsnummer: WO9625449

(56) Entgegenhaltungen:
- WO-A-95/19578
- US-A- 5 032 669
- ANGEWANDTE MAKROMOLEKULARE CHEMIE, Bd. 210, 1993, BASEL CH, Seiten 173-196, XP000396024 D. BRAUN, P. HEMPLER: "grafting of polyesters by free-radical chain transfer"
- MAKROMOLEKULARE CHEMIE, MACROMOLECULAR CHEMISTRY AND PHYSICS, Bd. 194, 1993, BASEL CH, Seiten 53-64, XP000334527 R. STORBECK, M REHAHN, M BALLAUFF: "Synthesis and properties of high-molecular-weight polyesters based on 1,4:3,6-dianhydrohexitols and terephthalic acid"

## Beschreibung

Die Erfindung betrifft flüssigkristalline chiral nematische Polyester enthaltend als Alkoholkomponente chirale Diolstruktureinheiten der Formel 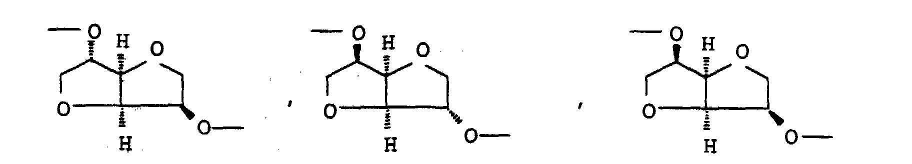 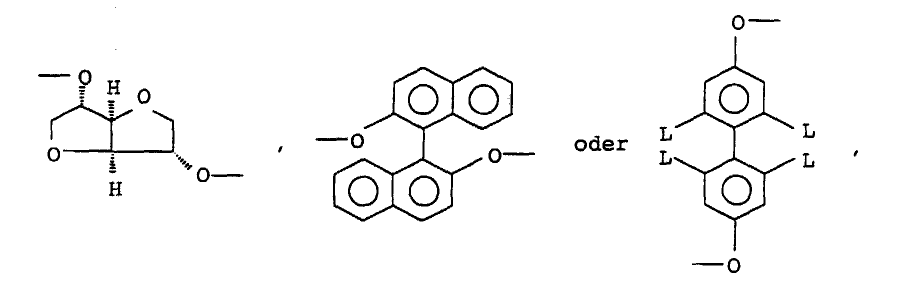 wobei
- L: C₁- bis C₄-Alkyl, C₁- bis C₄- Alkoxy, Halogen, COOR, OCOR, CONHR oder NHCOR ist und R C₁- bis C₄-Alkyl oder Wasserstoff bedeutet, sowie Diolstruktureinheiten der allgemeinen Formel 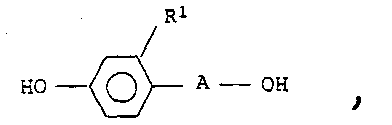 wobei
- A: eine direkte Bindung, (CH₂)ₙ, O-Alkylen, 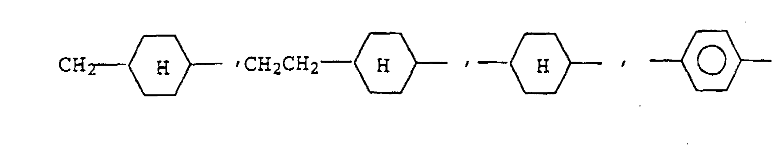 oder 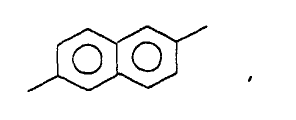
- R¹: Wasserstoff oder Phenyl und
- n: eine ganze Zahl von 1 bis 15 bedeuten,
und als Säurekomponente mesogene Gruppen enthaltende Dicarbonsäurereste.

Weiterhin betrifft die Erfindung die Verwendung der neuen Polyester und Pigmente, enthaltend die chiral nematischen Polyester.

Wie für formanisotrope Medien bekannt, können beim Erwärmen flüssigkristalline Phasen, sogenannte Mesophasen, auftreten. Die einzelnen Phasen unterscheiden sich durch die räumliche Anordnung der Molekülschwerpunkte einerseits sowie durch die Molekülanordnung hinsichtlich der Längsachsen andererseits (G. W. Gray, P. A. Winsor, Liquid Crystals and Plastic Crystals, Ellis Horwood Limited, Chichester 1974). Die nematisch flüssigkristalline Phase zeichnet sich dadurch aus, daß lediglich eine Orientierungsfernordnung durch Parallellagerung der Molekülachsen existiert. Unter der Voraussetzung, daß die die nematische Phase aufbauenden Moleküle chiral sind, entsteht eine sogenannte chiral nematische (cholesterische) Phase, bei der die Längsachsen der Moleküle eine zu ihr senkrechte, helixartige Überstruktur ausbilden (H. Baessler, Festkörperprobleme XI, 1971). Der chirale Molekülteil kann sowohl im flüssigkristallinen Molekül selbst vorhanden sein als auch als Dotierstoff zur nematischen Phase gegeben werden, wobei die chiral nematische Phase induziert wird. Dieses Phänomen wurde zuerst an Cholesterolderivaten untersucht ( z.B. H. Baessler, M. M. Labes, *J. Chem. Phys. 52,* 631 (1970)

Die chiral nematische Phase hat bemerkenswerte optische Eigenschaften: eine hohe optische Rotation sowie einen ausgeprägten Zirkulardichroismus, der durch Selektivreflektion von zirkular polarisierten Licht innerhalb der chiral nematischen Schicht entsteht. Die je nach Blickwinkel unterschiedlich erscheinenden Farben sind abhängig von der Ganghöhe der helixartigen Überstruktur, die ihrerseits vom Verdrillungsvermögen der chiralen Komponente abhängt. Dabei kann insbesondere durch Änderung der Konzentration eines chiralen Dotierstoffs die Ganghöhe und damit der Wellenlängenbereich des selektiv reflektierten Lichts einer chiral nematischen Schicht variiert werden. Solche chiral nematischen Systeme bieten für eine praktische Anwendung interessante Möglichkeiten. So kann durch Einbau chiraler Molekülteile in mesogene Acrylsäureester und Orientierung in der chiral nematischen Phase, z.B. nach der Photovernetzung, ein stabiles, farbiges Netzwerk hergestellt werden, dessen Konzentration an chiraler Komponente dann aber nicht mehr geändert werden kann (G. Galli, M. Laus, A. Angelon, *Makromol. Chemie 187,* 2289 (1986)). Durch Zumischen von nichtvernetzbaren chiralen Verbindungen zu nematischen Acrylsäureestern kann durch Photovernetzung ein farbiges Polymer hergestellt werden, welches noch hohe Anteile löslicher Komponenten enthält (I. Heyndricks, D. J. Broer, *Mol. Cryst. Liq. Cryst. 203,* 113 (1991)). Weiterhin kann durch statistische Hydrosilylierung von Gemischen aus Cholesterolderivaten und acrylathaltigen Mesogenen mit definierten cyclischen Siloxanen und anschließender Photopolymerisation ein chiral nematisches Netzwerk gewonnen werden, bei dem die chirale Komponente einen Anteil von bis zu 50% an dem eingesetzten Material haben kann; diese Polymerisate enthalten jedoch noch deutliche Mengen löslicher Anteile (F. H. Kreuzer, R. Mauerer, Ch. Müller-Rees, J. Stohrer, Vortrag Nr. 7, 22. Arbeitstagung Flüssigkristalle, Freiburg, 1993).

In der Anmeldung DE-OS-35 35 547 wird ein Verfahren beschrieben, bei dem eine Mischung cholesterolhaltiger Monoacrylate über eine Photovernetzung zu chiral nematischen Schichten verarbeitet werden kann. Allerdings beträgt der Gesamtanteil der chiralen Komponente in der Mischung ca. 94 %. Als reines Seitenkettenpolymer ist ein solches Material zwar mechanisch nicht sehr stabil, eine Erhöhung der Stabilität kann aber durch hochvernetzende Verdünnungsmittel erreicht werden.

Auch zahlreiche chiral nematische Polyester, in denen die mesogenen Strukturen in die Hauptkette eingebaut sind, sind allgemein bekannt, z.B. aus S. Vilasagar, A. Blumstein, *Mol. Cryst. Liq. Cryst.* (1980), 56 (8), 263-9; A. Blumstein, S. Vilasagar, S. Ponratham, S. B. Clough, R.B. Blumstein, G. Maret, *J. Polym. Sci., Polym. Phys. Ed.* (1982), 20 (5), 877-92; E. Chiellini, G. Galli, C. Malanga, N. Spassky, *Polym. Bull.* (1983), 9 (6-7), 336-43); H. J. Park, J. I. Jin, R. W. Leng, *Polymer* (1985), 26 (9), 1301-6; J. I. Jin, E. J. Choi, K. Y. Lee, *Polym. J.* (1986), 18 (1), 99.101; J. I. Jin, S. C. Lee, S. D. Chi, J. H. Chang; *Pollimo* (1986), 10 (4), 382-8; J. I. Jin, E. J. Choi, B. W. Jo, *Pollimo* (1986), 10 (6), 635-40; J. M. G. Cowie, H. H. Wu, *Makromol. Chem.* (1988), 189 (7), 1511-16; V. V. Zuev, I. G. Denisov, S. S. Skorokhodov, *Vysokomol. Soedin., Ser. A* (1989, 31 (5), 1056-61; A. S. Angeloni, D. Caretti, C. Carlini, E. Chiellini, G. Galli, A. Altomare, R. Solaro, M. Laus, *Liq. Cryst.* (1986), 4 (5), 513-27; K. Fujishiro, R. W. Lenz, *Macromolecules* (1992), 25 (1), 88-95; K. Fujishiro, R. W. Lenz, *Macromolecules* (1992), 25 (1), 81-7; V. V. Zuev, I. G. Denisov, S. S. Skorokhodov, *Vysokomol. Soedin., Ser. B* (1992), 34 (3), 47-54); V. V. Zuev, I. G. Denisov, S. S. Skorokhodov *Vysokomol. Soedin., Ser. B (1989),* 31 (2), 130-2.

Diese Polyester enthalten überwiegend offenkettige chirale Komponenten, die eine geringe Verdrillungsfähigkeit besitzen, so daß relativ große Anteile dieser Komponenten notwendig sind, um einen Farbeindruck zu erreichen. Dadurch ist die Auswahl der restlichen Polyesterbestandteile z.B. hinsichtlich ihrer mechanischen Eigenschaften eingeschränkt.

Chiral nematische Phasen lassen sich auch durch die thermische Polykondensation chiraler Diole mit Dicarbonsäuren erhalten. Alternativ kann der chirale Molekülteil auch in der Dicarbonsäureeinheit incorporiert sein. Die bislang bekannten Polyester zeigen in der Regel sehr hohe Glasstufen (>170°C) und nur sehr schmale Existenzbereiche der chiral nematischen Phase. Bei Erreichen der Umwandlungstemperatur sind die Polymere bei geeigneter Wahl der Menge und Art der chiralen Komponente farbig. Besonders vorteilhaft sind chirale Komponenten, die eine hohe helikale Verdrillung der flüssigkristallinen Struktur bewirken, so daß schon bei geringen Anteilen dieser Komponente farbige Strukturen entstehen.

Als chirale Komponenten wurden vorzugsweise von Aminosäuren abgeleitete Diole, chirale Hydrochinone, Camphersäuren, chirale Adipinsäurederivate und Propandiole eingesetzt. Diese chiralen Komponenten lassen jedoch bezüglich ihrer helikalen Verdrillungsfähigkeit noch zu wünschen übrig.

Aufgabe der Erfindung war es daher, neue chiral nematische Polyester mit stark verdrillend wirkenden chiralen Diolkomponenten mit breiteren flüssigkristallinen Phasenbereichen bereitzustellen, die schon bei geringem Anteil der chiralen Komponente im Wellenlängenbereich des sichtbaren Lichts selektiv reflektieren.

Demgemäß wurden die eingangs genannten chiral nematischen Polyester gefunden.

Unter den chiralen Diolkomponenten sind die von Kohlenhydraten abgeleiteten Dianhydrozucker, insbesondere Dianhydrosorbit und Dianhydromannit bevorzugt. Dianhydrosorbite sind bislang lediglich zur Darstellung nichtflüssigkristalliner Polycarbonate (DE 29 38 464 Al) bzw. Polyester (GB-PS 10 79 686) verwendet worden.

Als Dicarbonsäurekomponenten der chiral nematischen Polyester kommen verschiedene mesogene Gruppen enthaltende Dicarbonsäuren in Betracht. Bevorzugte Dicarbonsäurereste sind nachfolgend aufgeführt.

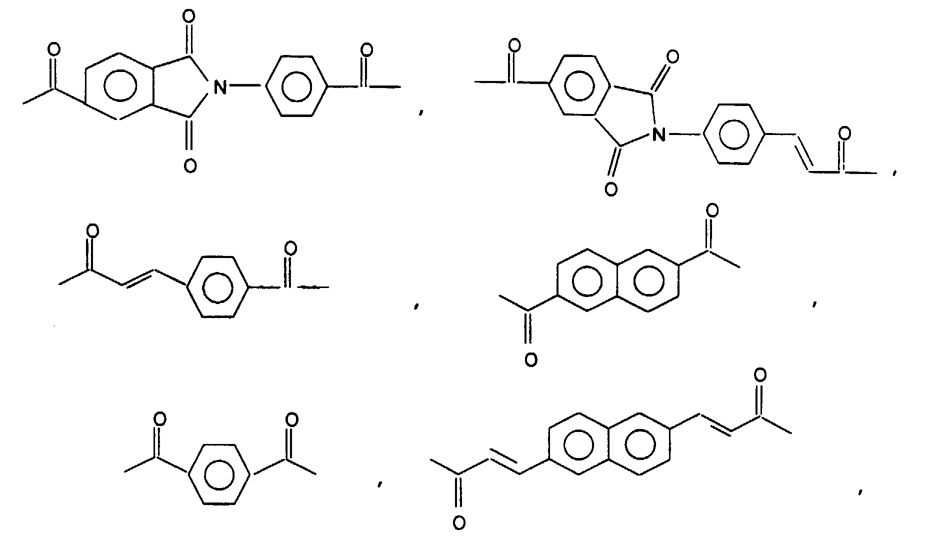

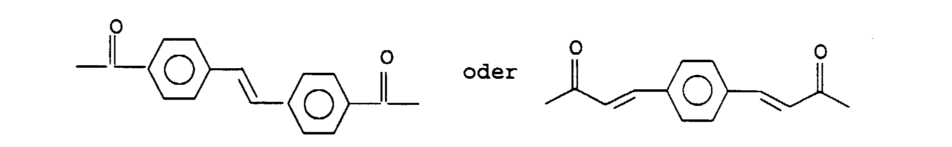

Die Alkohol- und die Säurekomponente werden üblicherweise in etwa äquimolaren Mengenverhältnissen für die Synthese eingesetzt.

Neben den genannten chiralen Diolstruktureinheiten enthalten die erfindungsgemäßen Polyester noch weitere Dioleinheiten. Cobausteine mit nichtchiraler Diolstruktur sind Verbindungen der Formel 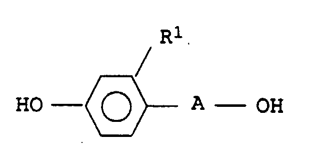 wobei
- A: eine direkte Bindung, z.B. eine Einfachbindung, (CH₂)ₙ, O-Alkylen, z.B. O(CH₂)ₙ, 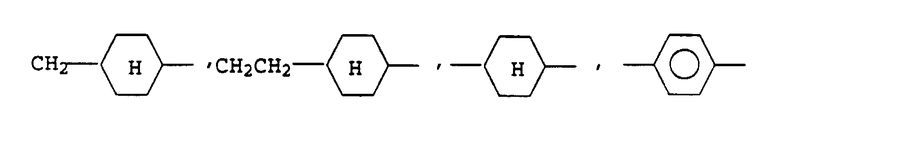 oder 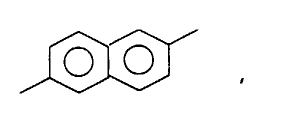
- R¹: Wasserstoff oder Phenyl und
- n: eine ganze Zahl von 1 bis 15 bedeuten.

Zuckerderivate auf der Basis von Dianhydrosorbit zeichnen sich durch ein sehr hohes Verdrillungsvermögen aus. Durch geeignete Wahl des Verhältnisses zwischen dem chiralen Diol und einem nichtchiralen Diol, vorzugsweise Phenylhydrochinon, lassen sich die flüssigkristallinen Phasenbereiche bis über 450°C hinaus stabilisieren (Tabelle 1, Beispiel 1).

Der Anteil der chiralen Diolstruktureinheiten liegt bevorzugt zwischen 1 und 80 mol-% des Gesamtgehaltes an Diolstruktureinheiten, besonders bevorzugt zwischen 2 und 20 mol-%, je nach gewünschtem Interferenzfarbton.

Insbesondere bevorzugt sind Polykondensationsprodukte mit Dianhydrosorbit und Phenylhydrochinon in wechselnden Verhältnissen als Diolkomponente und Dicarbonsäuren wie 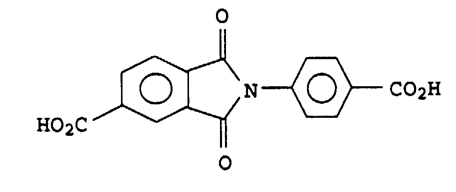 oder

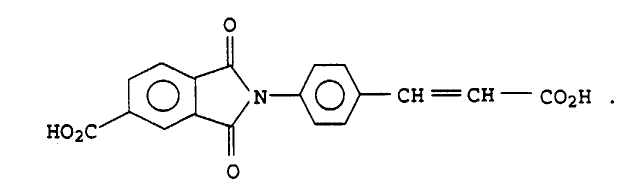

Der durch die Polykondensation erhaltene chiral nematische Polyester kann durch Photocycloaddition vernetzt werden, wodurch die optischen Eigenschaften des Materials bei veränderlichen Temperaturen fixiert werden können. Polymere mit Zimtsäure-Gruppen sind photochemisch aktiv und über eine [2+2]-Photocycloaddition vernetzbar. Die Vernetzung erfolgt dabei bevorzugt bei Wellenlängen zwischen 200 und 450 nm.

Besonders bevorzugt sind ebenfalls Copolykondensate enthaltend Dicarbonsäuren der Formel

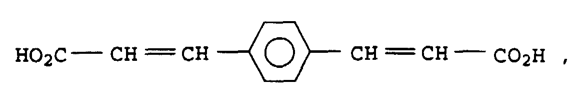

Die erfindungsgemäßen Polymere eignen sich insbesondere als Oberflächenbeschichtungsmaterialien, als optische Bauelemente und als chiral nematische Farbmittel. Sie können als farbgebendes Lacksystem zur Beschichtung von Oberflächen (z.B. als Automobillack), oder auch zur Herstellung von Farbpigmenten Verwendung finden. Die farbgebende Struktur des Polymers kann dabei durch schnelles Abkühlen oder photochemische Vernetzung der chiral nematischen Phase fixiert werden. Die Herstellung von Farbpigmenten kann z.B. durch Ablösen des orientierten Polymerfilms von der beschichteten Oberfläche und Mahlung zu plättchenförmigen Pigmenten erfolgen. Im Gegensatz zu den in der DE-A 42 40 743 beschriebenen Verfahren ist dabei eine Vernetzung des Polymers nicht zwingend erforderlich. Die Anwendung des Polymers als Lacksystem kann dabei als Pulverlack, in der Schmelze oder in Lösung (z.B. in N-Methylpyrrolidon oder Dimethylformamid) erfolgen. Die Orientierung des Systems geschieht im einfachsten Fall durch Tempern der beschichteten Oberfläche und kann durch die Einwirkung mechanischer, elektrischer oder magnetischer Kräfte gegebenenfalls verbessert werden.

### Beispiel 1

N-(4-Carboxyphenyl)trimellitimiddichlorid (20 mmol), Phenylhydrochinon (10 mmol) und Isosorbit (10 mmol) wurden unter Rückfluß in o-Dichlorbenzol (25 ml) für 18 h erhitzt. Nach Abkühlen wurde die Reaktionsmischung in Methanol eingerührt und der ausgefallene Niederschlag abfiltriert.

Durch Variation des Verhältnisses zwischen Phenylhydrochinon und Isosorbit wurden folgende Polymere hergestellt

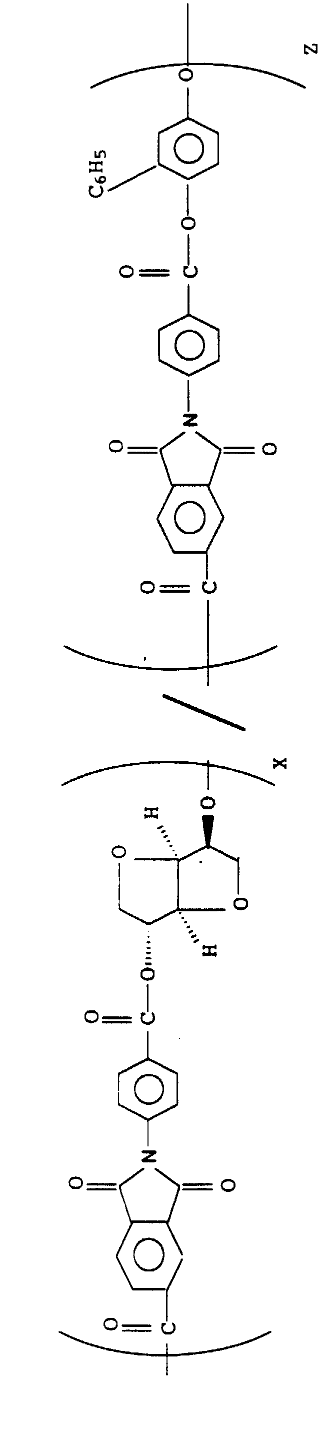

| Polymer | Verhältnis X/Z | Ausbeute (%) |
|---|---|---|
| a | 50/50 | 97 |
| b | 40/60 | 85 |
| c | 30/70 | 87 |
| d | 20/80 | 93 |
| e | 10/90 | 63 |
| f | 5/95 | 91 |

Vergleichsbeispiele X/Z 100/0 und 0/100 zeigen keine chiral nematische Phasen.

In Tabelle 1 sind die physikalischen Eigenschaften (inhärente Viskosität (ηᵢₙₕ), Drehwert ([α]_{D}), Schmelzpunkt (**T**ₘ), Glasstufe (**T**_{g}) und Klärpunkt (**T**ᵢ)), die beobachteten Texturen der LC-Phasen sowie die Interferenzfarben der Polymeren a bis f angegeben.

**Tabelle 1**

| Polymer | ηᵢₙₕ ¹⁾ (dl/g) | [α]_{D} ²⁾ [Grad] | **T**_{g} ³⁾ (°C) | **T**ᵢ ⁴⁾(°C) | Texturbild | Farbe |
|---|---|---|---|---|---|---|
| a | 0.56 | -116.4 | 200 | 200-300 | chiral nematisch | UV |
| b | 1.13 | - 91.9 | 202 | 360-375 | - " - | UV |
| c | 0.74 | - 70.1 | 192 | 420-440 | - " - | UV |
| d | 0.83 | - 44.0 | 193 | >450 | - " - | UV |
| e | 1.47 | - 26.1 | 195 | >450 | - " - | blau |
| f | 0.78 | - 9.6 | 195 | >450 | - " - | rot |

| | | | | | | |
|---|---|---|---|---|---|---|
| ¹⁾ bei 20°C gemessen, c = 2 g/l in Methylenchlorid/Trifluoressigsäure (4/1) | | | | | | |
| ²⁾ bei 20°C gemessen, c = 5 g/l in Methylenchlorid/Trifluoressigsäure (4/1) | | | | | | |
| ³⁾ DSC-Messungen, Heizrate 20°C/Minute (2. Heizkurve) | | | | | | |
| ⁴⁾ Polarisationsmikroskop Heizrate 10°C/Minute | | | | | | |

## Patentansprüche

1. Chiral nematische Polyester enthaltend als Alkoholkomponente chirale Diolstruktureinheiten der Formel 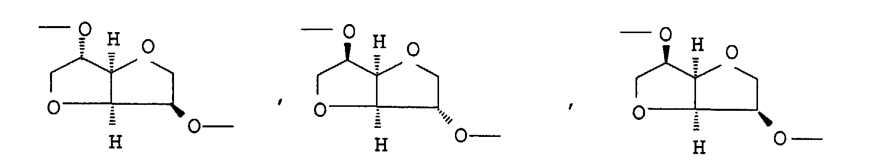 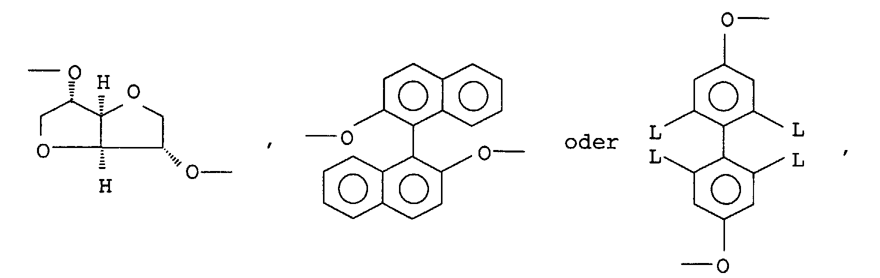 wobei die Reste
L unabhängig voneinander C₁- bis C₄-Alkyl, C₁- bis C₄-Alkoxy, Halogen, COOR, OCOR, CONHR oder NHCOR und R C₁- bis C₄- Alkyl oder Wasserstoff sind,
Diolstruktureinheiten der allgemeinen Formel 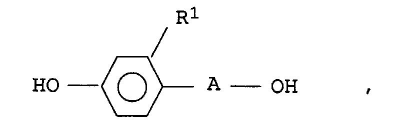
wobei
A eine direkte Bindung, (CH₂)ₙ, O-Alkylen, 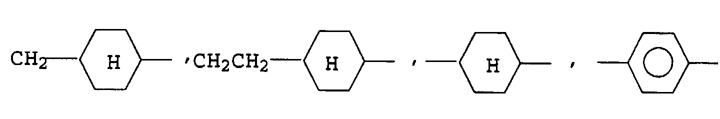 oder 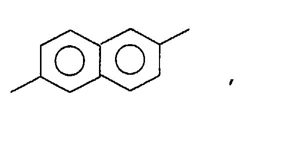
R¹ Wasserstoff oder Phenyl und
n eine ganze Zahl von 1 bis 15 bedeuten.
und als Säurekomponente mesogene Gruppen enthaltende Dicarbonsäurereste.

2. Chiral nematische Polyester nach Anspruch 1, die als Säurekomponente Säurereste der Formel 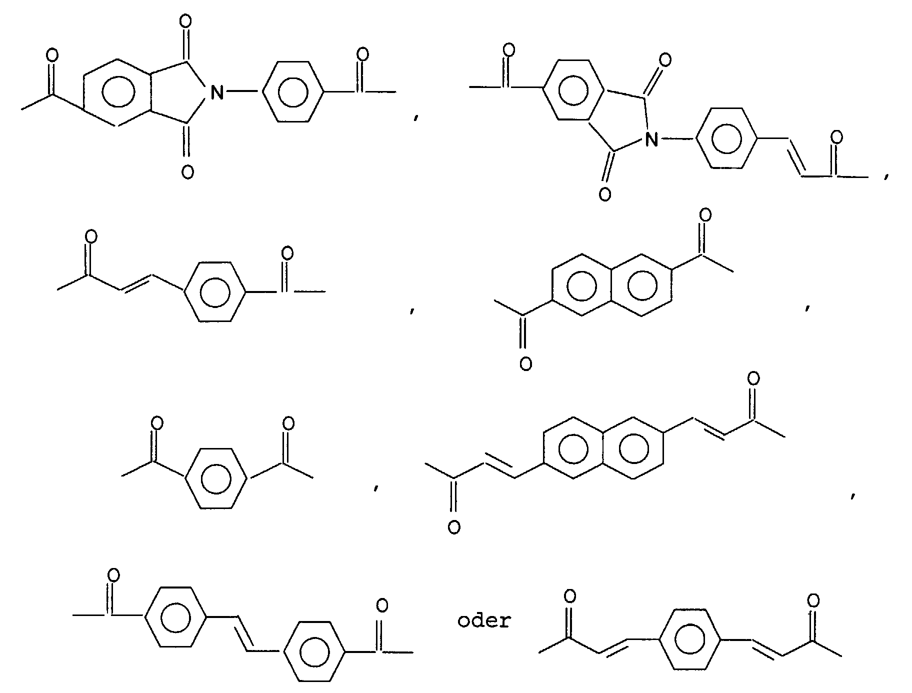 enthalten.

3. Chiral nematische Polyester nach Anspruch 1 oder 2, dadurch gekennzeichnet, daß der Anteil der chiralen Diolstruktureinheiten zwischen 1 und 80 mol-% des Gesamtgehalts an Diolstruktureinheiten liegt.

4. Chiral nematische Polyester nach Anspruch 1 oder 2, in denen die Säurekomponenten vernetzbare Gruppen enthalten.

5. Chiral nematische Polyester nach Anspruch 4, die photochemisch vernetzbare Gruppen enthalten.

6. Verwendung der chiral nematischen Polyester gemäß Anspruch 1 oder 2 als Oberflächenbeschichtungsmaterial, als optisches Bauelement oder als chiral nematisch flüssigkristallin geordnetes Farbmittel.

7. Verwendung der chiral nematischen Polyester gemäß Anspruch 1 oder 2 als farbgebenden Bestandteil von Lacksystemen zur Beschichtung von Oberflächen.

8. Pigmente mit cholesterisch flüssigkristalliner Ordnungsstruktur, enthaltend chiral nematische Polyester gemäß Anspruch 1 oder 2.

## Claims

1. A chiral nematic polyester comprising as alcohol component chiral diol structural units of the formula 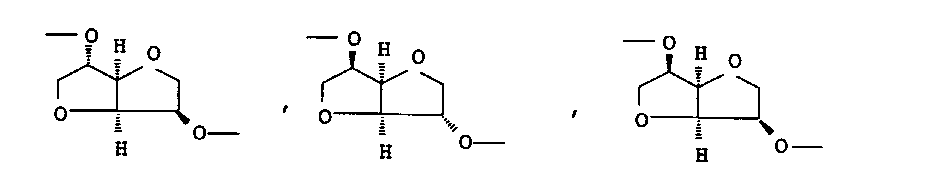 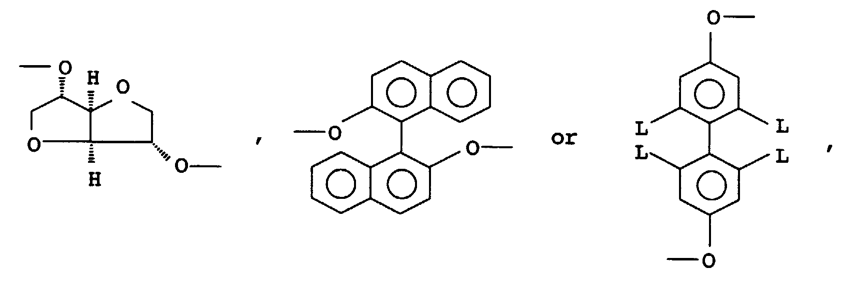 where the
L radicals are independently of one another C₁-C₄-alkyl, C₁-C₄-alkoxy, halogen, COOR, OCOR, CONHR or NHCOR, and R is C₁-C₄-alkyl or hydrogen,
diol structural units of the formula 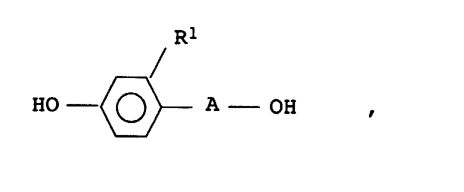 where
A is a direct linkage, (CH₂)ₙ, O-alkylene, 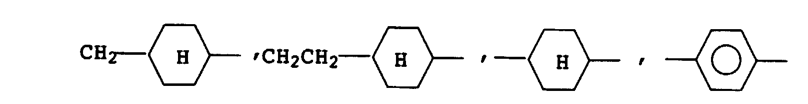 or 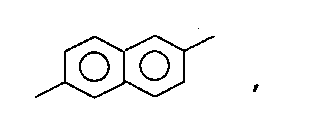
R¹ is hydrogen or phenyl and
n is an integer from 1 to 15,
and as acid component dicarboxylic acid residues comprising mesogenic groups.

2. A chiral nematic polyester as claimed in claim 1, which comprises as acid component acid residues of the formula

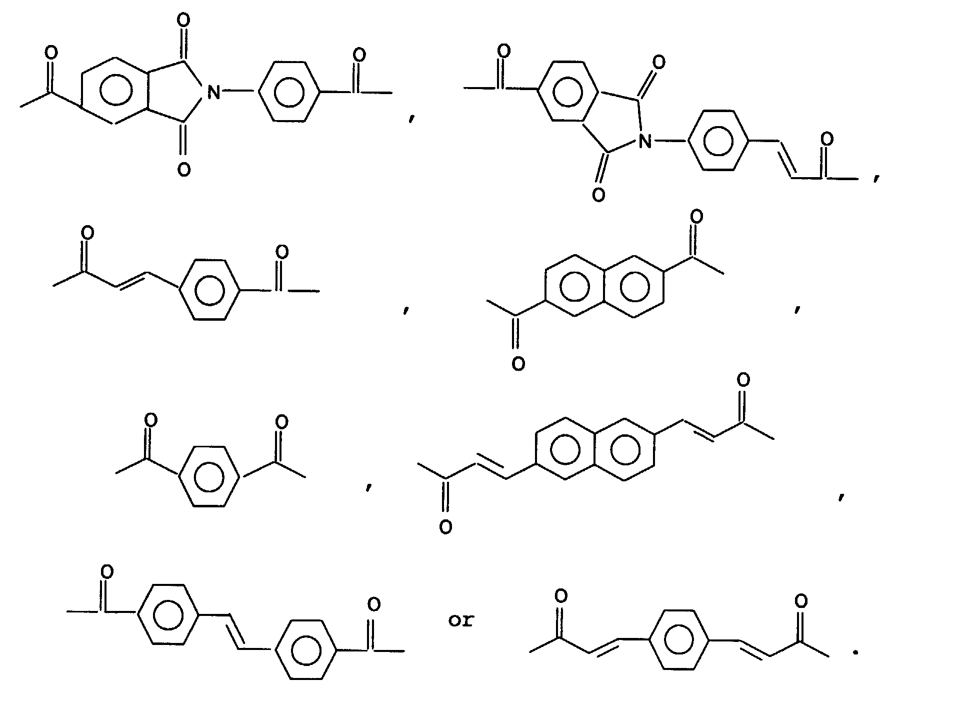

3. A chiral nematic polyester as claimed in claim 1 or 2, wherein the proportion of chiral diol structural units is from 1 to 80 mol% of the total content of diol structural units.

4. A chiral nematic polyester as claimed in claim 1 or 2, wherein the acid components comprise crosslinkable groups.

5. A chiral nematic polyester as claimed in claim 4, which comprises photochemically crosslinkable groups.

6. The use of a chiral nematic polyester as claimed in claim 1 or 2 as surface-coating material, as optical component or as chiral nematic liquid crystalline coloring agent.

7. The use of a chiral nematic polyester as claimed in claim 1 or 2 as coloring component of surface-coating systems.

8. A pigment with a cholesteric liquid crystalline order structure comprising a chiral nematic polyester as claimed in claim 1 or 2.

## Revendications

1. Polyester chiral et nématique contenant en tant que composant alcool des motifs diol chiraux de formule 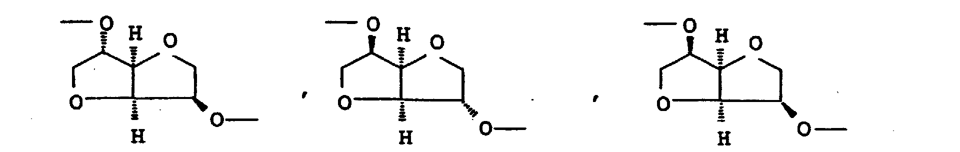 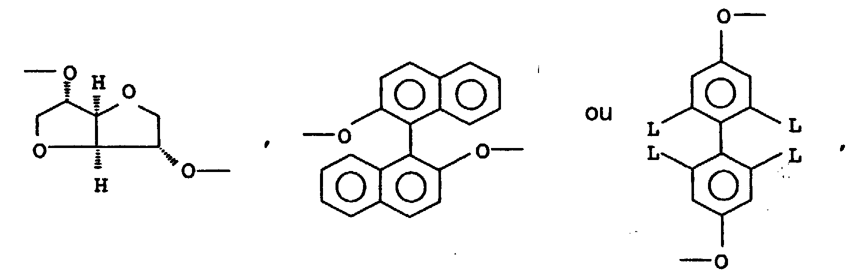 où les restes
L représentent indépendamment les uns des autres, un groupement alkyle en C₁-C₄, alcoxy en C₁-C₄, un atome d'halogène, COOR, OCOR, CONHR ou NHCOR et R représente un groupement alkyle en C₁-C₄ ou un atome d'hydrogène,
des motifs diol de formule générale 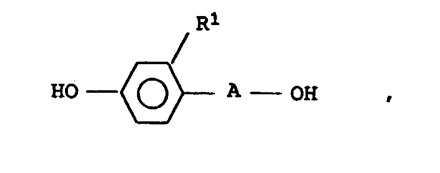 où
A représente une liaison directe, (CH₂)ₙ, un groupement O-alkylène, 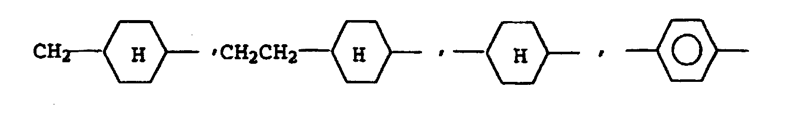
ou 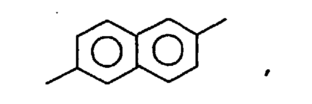
R¹ représente un atome d'hydrogène ou un groupement phényle et
n représente un nombre entier de 1 à 15,
et, en tant que composant acide, des restes d'acides dicarboxyliques contenant des groupements mésogènes.

2. Polyester chiral et nématique selon la revendication 1, contenant en tant que composant acide, des restes acides de formule

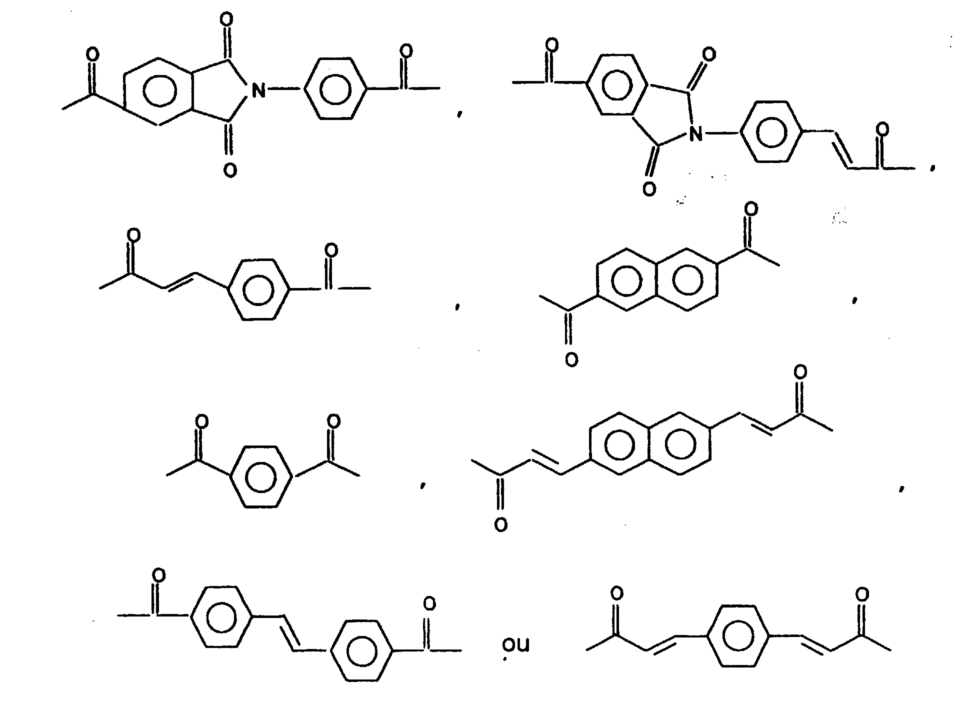

3. Polyester chiral et nématique selon la revendication 1 ou 2, caractérisé en ce que la proportion des motifs diols chiraux représente entre 1 et 80% en moles de la teneur totale en motifs diol.

4. Polyester chiral et nématique selon la revendication 1 ou 2, dans lesquels les composants acides contiennent des groupements réticulables.

5. Polyester chiral et nématique selon la revendication 4, contenant des groupements réticulables par voie photochimique.

6. Utilisation de polyester chiral et nématique selon la revendication 1 ou 2, en tant que matériau de revêtement de surface, en tant que composant optique ou en tant que colorant ordonné de type cristal liquide chiral et nématique.

7. Utilisation de polyester chiral et nématique selon la revendication 1 ou 2, en tant que composant donnant de la couleur à des systèmes de laques pour le revêtement de surfaces.

8. Pigments ayant une structure ordonnée de type cristal liquide cholestérique, contenant un polyester chiral et nématique selon la revendication 1 ou 2.
